# EUROPÄISCHE PATENTANMELDUNG

(11) **EP 1 123 832 A2**
(43) Veröffentlichungstag der Anmeldung: **16.08.2001**
(21) Anmeldenummer: 01102634.1
(22) Anmeldetag: 07.02.2001
(51) Int. Cl.: B60N 2/26

(54) **Kraftfahrzeug mit Kinder- oder Babysitz**

(30) Priorität: 09.02.2000 DE 10005965
(71) Anmelder: DETHLEFFS GmbH, D-88316 Isny (DE)
(72) Erfinder: Schmidt, Gerhard, 88316 Isny (DE)
(74) Vertreter: Patentanwälte Eisele, Otten, Roth & Dobler

(57) **Zusammenfassung**

Es wird ein Kraftfahrzeug vorgeschlagen, welches einen lösbaren Sitz (3), insbesondere Kinder- oder Babysitz umfasst, der zwischen Fahrer- und Beifahrersitz integriert ist.

## Beschreibung

Die Erfindung betrifft ein Kraftfahrzeug mit Kinder- oder Babysitz nach dem Oberbegriff des Anspruchs 1.

Bislang werden Sitze, insbesondere Kinder- oder Babysitze, für Kraftfahrzeuge in vielfältigsten Varianten verwendet. Allen Varianten gemeinsam ist die Anordnung des Kinder- oder Babysitzes auf einem Fahrzeugsitz. Eine nicht sehr gängige Abwandlung dieser Anordnung ist die Integration eines Kinder- oder Babysitzes in einen Fahrzeugsitz, wobei dieser mittels weniger Handgriffe vom "Erwachsenensitz" zum "Kindersitz" umgebaut werden kann.

Nachteilig bei allen Varianten ist jedoch, dass eine Sitzgelegenheit für einen Erwachsenen im Fahrzeug entfällt.

Bei Fahrten, bei denen beide Elternteile sowie ein Kind beziehungsweise Baby mit dem Fahrzeug mitfahren, ist weiterhin nachteilig, dass nicht beide Elternteile neben dem Kind beziehungsweise Baby Platz nehmen können, so dass dem Kind beziehungsweise Baby lediglich ein Elternteil als Bezugsperson während der Fahrt zur Verfügung steht.

Der Erfindung liegt die Aufgabe zugrunde, ein Kraftfahrzeug mit einem Kinder- oder Babysitz vorzuschlagen, wobei die Anzahl der Sitzgelegenheiten für Erwachsene im Fahrzeug nicht reduziert und es gleichzeitig ermöglicht wird, dass beide Elternteile unmittelbar als Bezugsperson auch während der Fahrt dem Kind beziehungsweise Baby zur Verfügung stehen.

Diese Aufgabe wird ausgehend von den Merkmalen des Oberbegriffs des Anspruchs 1 durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßer Sitz dadurch aus, dass der Sitz seitlich neben einem Fahrzeugsitz angeordnet ist.

Vorteilhafterweise reduziert ein derartiger Sitz die Anzahl der Sitzgelegenheiten für Erwachsene im Fahrzeug nicht. Aus Platzgründen ist eine solche Anordnung bei gängigen Personenkraftfahrzeugen nicht möglich. Eine erfindungsgemäße Sitzanordnung ist aus diesem Grunde vor allem bei größeren Kraftfahrzeugen möglich, wie dies beispielsweise bei Wohnmobilen, Campingfahrzeugen oder sonstigen Kraftfahrzeugen mit einem entsprechenden Zwischenraum zwischen Fahrer- und Beifahrersitz der Fall ist.

Wird der erfindungsgemäße Sitz zwischen einem Fahrer- und einem Beifahrersitz angeordnet, sitzt das Kind oder das Baby auch während der Fahrt unmittelbar z. B. neben seinen Eltern. So ist ein unmittelbarer Bezug des Kindes beziehungsweise Babys zu einem oder beiden Elternteilen möglich. Weiterhin nimmt das Kind beziehungsweise Baby während der Fahrt die Umgebung des Fahrzeugs besser wahr.

Vorzugsweise ist wenigstens eine Verbindungsanordnung zu wenigstens einem Fahrzeugsitz und/oder zum Fahrzeug selbst vorgesehen, so dass eine stabile und sichere Anordnung des Sitzes gewährleistet ist. Hierbei kann beispielsweise die Verbindungsanordnung sowohl zum Fahrer als auch zum Beifahrersitz bestehen sowie eventuell eine zusätzliche Verbindungsanordnung zum Fahrzeug umfassen. Hierdurch wird die notwendige Stabilität erhalten.

Gegebenenfalls kann die Verbindungsanordnung nicht beide Fahrzeugsitze umfassen, da hierdurch die individuelle Verstellmöglichkeit der Fahrzeugsitze eingeschränkt wird, d.h. das Anpassen der Fahrzeugsitzeinstellung müsste vom Fahrer und Beifahrer aufeinander abgestimmt werden.

Die Verbindungsanordnung zu den Fahrzeugsitzen kann sowohl im Bereich der Rückenlehne und/oder im Bereich der Sitzfläche realisiert werden.

In einer besonderen Ausgestaltung der Erfindung ist die Verbindungsanordnung zwischen Sitz und Fahrzeug realisiert, d.h. beispielsweise zwischen Sitz und Boden des Fahrzeuges, hierbei insbesondere zu einer oder mehreren Schienen oder Trägern, an denen die Fahrzeugsitze bereits befestigt werden. Hierdurch ist eine Anordnung des Sitzes im Fahrzeug möglich, bei der die Fahrzeugsitze weiterhin vollkommen uneingeschränkt verstellt werden können.

Vorteilhafterweise ist die Verbindungsanordnung lösbar, so dass der Sitz bei Bedarf wieder entfernt werden kann.

In einer besonderen Ausführungsform umfasst die Verbindungsanordnung ein Verbindungselement, mit dem beispielsweise der Abstand zwischen Fahrer- und Beifahrersitz überbrückt und gegebenenfalls an einen der beiden Fahrzeugsitze starr gekoppelt wird. Hierbei kann das Verbindungselement beispielsweise wenigstens einen Holm umfassen, der wenigstens an einen der beiden Fahrzeugsitze gekoppelt oder angeflanscht wird.

Vorzugsweise sind ein oder mehrere Holme in eine Rückenlehne und/oder in den Bereich der Sitzfläche des Fahrzeugsitzes und/oder in den Sitz ein- oder ausschiebbar, wobei der erfindungsgemäße Sitz mit dem ausgezogenen Holm verbunden wird, zum Beispiel mittels aufsteckbarer Halterungen oder indem der Holm die Schale des Sitzes durchdringt.

In einer besonderen Weiterbildung des Verbindungselementes wird dieses als eine Art Brücke oder Brückenanordnung zwischen den beiden Fahrzeugsitzen realisiert, wobei die Brücke beispielsweise zwischen den Fahrzeugsitzflächen angeordnet ist und der Kinder- oder Babysitz auf dieser Brücke zusätzlich befestigt wird.

Eine weitere Ausführungsform der Erfindung umfasst ein Verbindungselement, das den Abstand vom Fahrzeugboden zur Fahrzeugsitzhöhe überbrückt und auf welchem der Sitz befestigt ist. Weiterhin kann als Verbindungselement eine Verstrebung vom Kindersitz zum Fahrzeugboden vorgesehen werden, wobei vorzugsweise die Verstrebung, vom Sitz aus betrachtet, gegen die Fahrtrichtung weist. Hiermit wird der Sitz gerade bei Bremsvorgängen des Fahrzeugs zusätzlich stabilisiert.

In einer besonderen Ausgestaltung umfasst die mechanische Verbindungsanordnung wenigstens ein Aufnahmeelement, so dass in einfacher Weise eine lösbare Verbindungsanordnung mit einem Verbindungselement und einem Aufnahmeelement realisiert wird. Vorteilhafterweise kann für einen zwischen den Fahrzeugsitzen angeordneten, erfindungsgemäßen Sitz das Aufnahmeelement u-förmig, beispielsweise nach oben offen, ausgebildet werden, wobei das u-förmige Aufnahmeelement vorzugsweise zur Befestigung an den Fahrzeugsitzen an eine Halteplatte beziehungsweise Flanschplatte angeordnet ist, so dass mittels eines entsprechenden Verbindungselementes, beispielsweise als am Sitz angeordnete Bolzen ausgebildet, dieses in das Aufnahmeelement eingehängt wird. Hierbei kann die u-förmige Aufnahme beziehungsweise das entsprechende Verbindungselement sowohl am Fahrzeugsitz als auch am Kinder- oder Babysitz angeordnet werden.

Eine zweckmäßige Ausgestaltung des Erfindungsgegenstandes sieht vor, dass die Verbindungsanordnung wenigstens eine Sicherung des Aufnahmeelementes umfasst. Hiermit wird gewährleistet, dass ein unerwünschtes Lösen der Verbindungsanordnung unterbleibt.

Schließlich sieht eine weitere Ausführung des Gegenstands der Erfindung vor, dass vertikal und/oder horizontal der Sitz um wenigstens eine Achse verschwenkbar ist. Vorteilhafterweise wird hiermit ermöglicht, dass die Neigung des Sitzes verstellt werden kann.

Weiterhin kann vorteilhafterweise der Sitz um eine vertikale Achse geschwenkt werden, so dass der erfindungsgemäße Sitz gegebenenfalls nach hinten geschwenkt werden kann, um beispielsweise dem Fahrer oder Beifahrer eines Wohnmobils den Durchgang von seinem Fahrzeugsitz zum Wohnbereich ohne große Demontage des erfindungsgemäßen Sitzes zu ermöglichen.

Weitere Einzelheiten der Erfindung werden in der Zeichnung anhand von schematisch dargestellten Ausführungsbeispielen beschrieben.

Hierbei zeigt:
- Fig. 1: eine schematische Draufsicht des vorderen Bereiches eines Kraftfahrzeuges mit einem erfindungsgemäßen Sitz,
- Fig. 2: eine schematische, perspektivische Darstellung eines erfindungsgemäßen Sitzes zwischen zwei Fahrzeugsitzen und
- Fig. 3: eine schematische, perspektivische Darstellung eines weiteren, erfindungsgemäßen Sitzes zwischen zwei Fahrzeugsitzen.

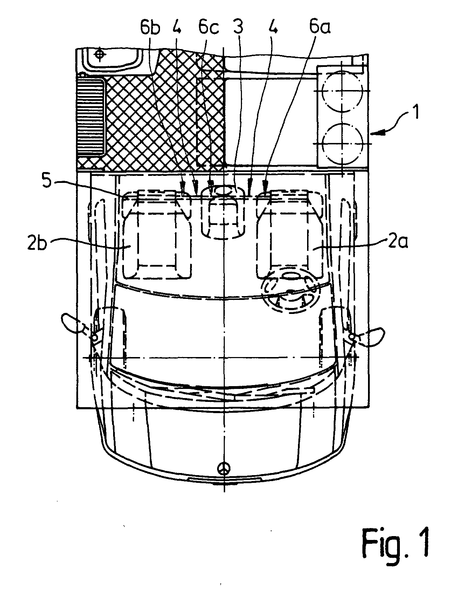

In Figur 1 ist die Draufsicht des vorderen Bereiches eines Kraftfahrzeuges 1 dargestellt, wobei beispielhaft ein Wohnmobil veranschaulicht ist. Zwischen zwei Fahrzeugsitzen 2a, 2b ist ein erfindungsgemäßer Sitz 3 angeordnet. Dieser ist mittels einer Verbindungsanordnung 4 mit den Kraftfahrzeugsitzen 2a, 2b verbunden.

Die Verbindungsanordnung 4 umfasst ein Verbindungselement 5, wobei dieses als Rohr 5 beziehungsweise Holm 5 ausgeführt ist. Die Befestigung des Sitzes 3 erfolgt hierbei in der Weise, dass der Holm 5, beispielsweise bei offener Beifahrertür, zuerst durch ein Aufnahmeelement 6b der Rückenlehne des Fahrzeugsitzes 2b geschoben wird, danach wird der Holm 5 durch ein Aufnahmeelement 6c der Rückenlehne des Sitzes 3 geschoben und schließlich in ein entsprechendes Aufnahmeelement 6a der Rückenlehne des Fahrzeugsitzes 2a eingeführt, wobei der Holm 5 beispielsweise mit Hilfe einer nicht näher dargestellten Sicherung arretiert wird und die Aufnahmeelemente 6a, 6b, 6c als Hülse ausgeführt sind.

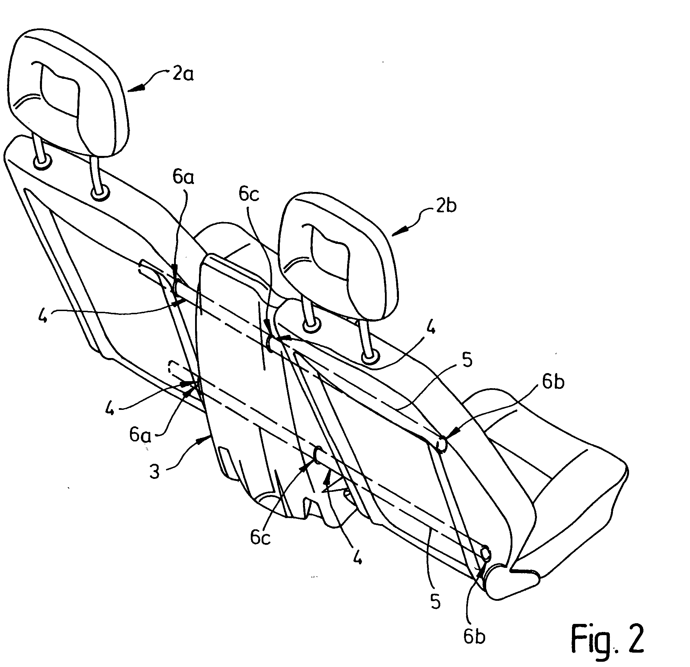

In Figur 2 ist das Ausführungsbeispiel aus Figur 1 in perspektivischer Darstellung veranschaulicht, wobei die Verbindungsanordnung des Sitzes 3 mit den Fahrzeugsitzen 2a, 2b mittels zweier Verbindungselemente 5 realisiert ist. In Figur 2 sind die Aufnahmeelemente 6a, 6b, 6c anschaulich dargestellt, wobei es sich hier um röhrenförmige Aufnahmen 6a, 6b, 6c handelt, durch die die Holme 5 hindurchgeschoben werden. Ein weiterer, nicht näher dargestellter Holm kann die Sitze 2a, 2b und 3 im Sitzbereich durchsetzen.

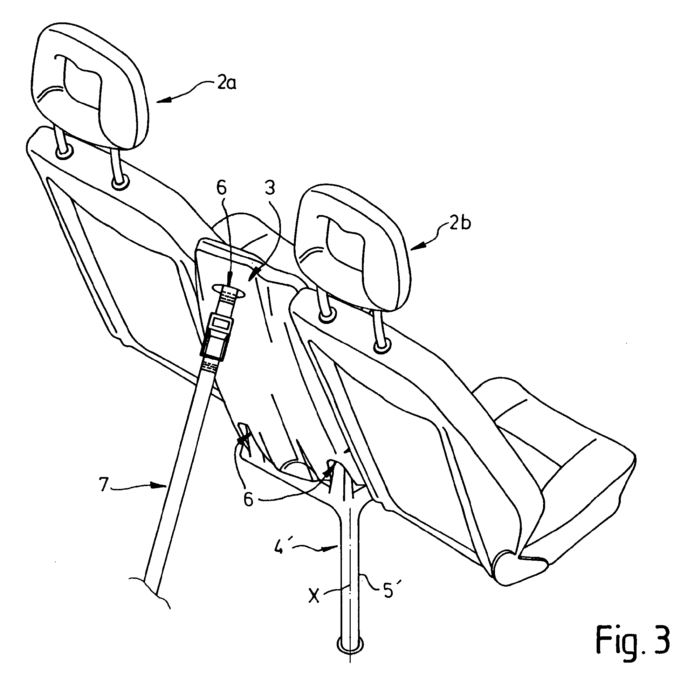

Ein weiteres Ausführungsbeispiel ist in Figur 3 dargestellt. Der wesentliche Unterschied zu den zuvor dargestellten Ausführungsbeispielen besteht darin, dass der Sitz 3 mittels einer Verbindungsanordnung 4' unmittelbar mit dem Fahrzeugboden verbunden ist. Zusätzlich ist eine Strebe 7 zur Erhöhung der Stabilität an der Rückenlehne des Sitzes 3 angebracht. Die Aufnahmeelemente 6 sind im Sitz 3 integriert.

Das Verbindungselement 5' ist um seine vertikale Achse X drehbar gelagert, so dass der Sitz 3 in Figur 3 bei Bedarf hinter den Fahrzeugsitz 2b geschwenkt werden kann.

Die zuvor ausgeführten Ausführungsbeispiele stellen keine abschließende Auflistung möglicher erfindungsgemäßer Sitze 3 dar. Aus dem Dargestellten wird jedoch deutlich, dass der erfindungsgemäße Sitz 3 die Anzahl der Sitzgelegenheiten für Erwachsene nicht reduziert und zusätzlich sowohl einen direkten Bezug des Kindes beziehungsweise Babys zu beiden Elternteilen ermöglicht als auch die Umgebung des Fahrzeugs vom Kind beziehungsweise Baby während der Fahrt besser wahrgenommen wird.

Es ist auch Gegenstand der Erfindung herkömmliche Kraftfahrzeug-Kindersitze mit einer entsprechend angepassten Verbindungsmechanik zwischen dem Fahrer- und Beifahrersitz anzuordnen.

### Bezugszeichenliste:

- 1: Kraftfahrzeug
- 2a, b: Fahrzeugsitz
- 3: Sitz
- 4: Verbindungsanordnung
- 5: Verbindungselement, Holm, Rohr
- 6a, b, c: Aufnahmeelement, Hülse
- 7: Strebe

## Patentansprüche

1. Kraftfahrzeug, insbesondere Wohnmobil, Campingbus oder dergleichen, mit einem Fahrersitz und einem Beifahrersitz, dadurch gekennzeichnet, dass zwischen dem Fahrersitz (2a) und dem Beifahrersitz (2b) ein zusätzlicher, entfernbarer Sitz (3), insbesondere Kinder- oder Babysitz, angeordnet ist.

2. Kraftfahrzeug nach Anspruch 1, dadurch gekennzeichnet, dass wenigstens eine mechanisch, lösbare Verbindungsanordnung (4) zu wenigstens einem Fahrzeugsitz (2a, 2b) und/oder zum Fahrzeug (1) vorgesehen ist.

3. Kraftfahrzeug nach Anspruch 2, dadurch gekennzeichnet, dass die Verbindungsanordnung (4) wenigstens ein Verbindungselement (5) umfasst.

4. Kraftfahrzeug nach einem der vorgenannten Ansprüche 2 bis 3, dadurch gekennzeichnet, dass die Verbindungsanordnung (4) wenigstens ein Aufnahmeelement (6a, 6b, 6c) umfasst.

5. Kraftfahrzeug nach Anspruch 4, dadurch gekennzeichnet, dass die Verbindungsanordnung (4) wenigstens eine Sicherung des Aufnahmeelementes (6a, 6b, 6c) umfasst.

6. Kraftfahrzeug nach einem der vorgenannten Ansprüche 2 bis 5, dadurch gekennzeichnet, dass der Sitz (3) um wenigstens eine Achse vertikal und/oder horizontal verschwenkbar ist.
